(19) Europäisches Patentamt
European Patent Office
Office européen des brevets

(11) EP 0 533 034 B1

(12) EUROPEAN PATENT SPECIFICATION

(45) Date of publication and mention of the grant of the patent:
**02.04.1997 Bulletin 1997/14**

(51) Int Cl.$^6$: **C09K 19/42**, C09K 19/30

(21) Application number: **92115369.8**

(22) Date of filing: **09.09.1992**

(54) **Nematic liquid crystal mixtures**

Nematische Flüssigkristallmischungen

Mélanges de cristaux liquides nématiques

(84) Designated Contracting States:
**DE GB**

(30) Priority: **17.09.1991 EP 91115759**

(43) Date of publication of application:
**24.03.1993 Bulletin 1993/12**

(73) Proprietor: **MERCK PATENT GmbH**
**D-64271 Darmstadt (DE)**

(72) Inventors:
- **Rieger, Bernhard, Dr.,**
  **Wacore-Tamagawagakuen**
  **Yokohama-shi, Kanagawa-pref. 227 (JP)**
- **Plach, Herbert, Dr.**
  **W-6100 Darmstadt (JP)**
- **Tanaka, Yukiomi**
  **Atsugi-shi, Kanagawa Pref. 243 (JP)**
- **Numata, Hiroshi, Forest-Hills-Miho 3-202**
  **Yokohama-shi, Kanagawa Pref. 227 (JP)**
- **Reiffenrath, Volker**
  **W-6101 Rossdorf (DE)**
- **Hittich, Reinhard, Dr.**
  **W-6101 Modautal 1 (DE)**

(56) References cited:
**WO-A-90/08757** **WO-A-91/02779**
**WO-A-91/03450** **WO-A-91/15555**
**DE-A- 4 139 553**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The invention relates to novel nematic LC mixtures which can be used for an active matrix liquid crystal display (AMD) being operated in the second or a higher transmission minimum of the Gooch-Tarry curve. The novel nematic liquid-crystal compositions are very stable and exhibit high optical anisotropy for use in AMD's, e.g. for projection systems.

Active matrix displays (AMD) are highly favoured for commercially interesting displays with a high information content. Such AMDs are used for TV application and also for displays for e.g. laptops, automobiles and aeroplanes.

AMDs have non-linear electrical switching elements which are integrated at each picture element. As non-linear driving elements thin film transistors (TFT) [Okubo, U., et al., 1982, SID 82 Digest, pp. 40-41] or diodes (e.g.: metal insulator metal: MIM) [Niwa, K., et al., 1984, SID 84 Digest, pp. 304-307] can be applied. These non-linear driving elements allow to use an electro-optical effect with a rather flat electro-optical characteristic if a good viewing angle characteristic can be obtained. So a TN-type LC cell [Schadt, M. and Helfrich, W., 1971, Appl. Phys. Lett., 18, 127] with a twist angle in the region of 90° can be used. To provide the good contrast over a wide viewing angle, operation in the region of the first minimum of transmission [Pohl, L., Eidenschink, R., Pino, F., del. and Weber, G., 1980, German Pat., DBP 30 22 818, and 1981, US Pat. 4 398 803; Pohl, L., Weber, G., Eidenschink, R., Baur, G., and Fehrenbach W., 1981,Appl. Phys. Lett., 38, 497; Weber, G., Finkenzeller, U., Geelhaar, T., Plach, H.J., Rieger, B., and Pohl, L., 1988, Int. Symp. on Liq. Cryst., Freiburg, to be published in Liq. Crys.] is favoured. These AMDs are very well suited for direct view and projection type TV-displays and consequently are of high commercial interest. For these applications some physical properties of the liquid crystals become more important than for passive TN displays. Some of the decisive properties for the performance of an AMD are resistivity and UV- and thermal stability of the liquid crystal [Togashi, S., Sekiguchi, K., Tanabe, H., Yamamoto, E., Sorimachi, K. Tajina, E., Watanabe, H., Shimuzu, H., Proc. Eurodisplay 84,Sept. 1984: A 210-288 Matrix LCD Controlled by Double Stage Diode Rings, p. 141 ff, Paris; Stromer, M., Proc. Eurodisplay 84, Sept. 1984: Design of Thin Film Transistors for Matrix Adressing of Television Liquid Crystal Displays, p. 145 ff, Paris]. A problem often encountered is the adverse influence of UV-illumination on the resistivity and therefore on the general performance of the liquid crystal mixture in the display.

In an AMD the non-linear switching elements are addressed in a multiplex scheme. So they charge the electrodes of a pixel in the limited time they are active. Then they become inactive until they are addressed again in the next cycle. Consequently the change of the voltage on an activated (charged) pixel is a nondesired but a very decisive feature of such a display. The discharge of a pixel is determined by two factors. These are the capacity of the pixel element including liquid crystal and the resistivity of the dielectric material between the electrodes, namely the liquid crystal. The characteristic time constant of the decay of the voltage at a pixel (RC-time) has to be significantly bigger than the time between two addressing cycles ($t_{adr.}$). A parameter frequently used to describe the performance of an AMD is the voltage holding ratio HA of a picture element:

$$HR = \frac{V\,(to) + V\,(to + tadr.)}{2\,V\,(to)}$$

As the voltage at a pixel decays exponentially an increase of the holding ratio necessitates liquid crystal materials with exceptionally high resistivities.

There are several points of importance for the resistivity of the liquid crystal inside a display, e.g. orientation layers, curing condition of the orientation material. But by no means less important are the electrical properties of the liquid crystal used. Especially the resistivity of the liquid crystal in the display determines the magnitude of the voltage drop at the pixel.

Earlier investigations with low-Δn materials have shown, that the requirements with regard to resistivity and UV-stability and temperature dependence of the resistivity for TFT-applications cannot be met with materials containing cyano moieties as terminal groups. Non-cyano materials containing halogenated terminal groups can show far better resistivity values and UV-stability as well as superior viscosity values than conventionally used cyano materials. However, in general these non-cyano materials unfortunately show a strong tendency towards forming smectic phases, especially at low temperatures.

Modern commercial mixtures have to operate over a wide temperature range; therefore, crystallization or formation of smectic phases at low temperatures has to be excluded. Good solubility is one of the most important preconditions for the usability of liquid crystalline materials in the development of nematic mixtures. Compounds with high melting temperatures or a tendency to form smectic phases are for this reason not suitable.

By very careful selection of the components and an appropriate mixture design it was possible to find low birefringence non-cyano mixtures having a broad nematic temperature range for first minimum application [B. Rieger et al., Proc. 18. Freiburger Arbeitstagung Flüssigkristalle, Freiburg 1989, 16 (1989)]. Non-cyano materials with high birefringence, which are essential for the mixture concept of this invention unfortunately show in many cases even more

unfavourable properties such as high melting points and/or strongly smectogenic behaviour than similar materials with lower birefringence:

| No. | Chemical structure | Δn | Mesophases (°C) |
|---|---|---|---|
| 1 | 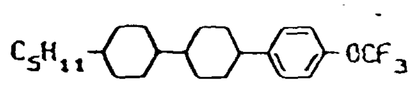 | 0.10 | K 52 S 68 N 156 I |
| 2 | 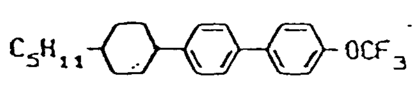 | 0.14 | K 43 S 128 N 147 I |
| 3 | 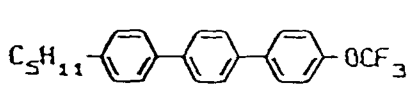 | 0.22 | K 211 S 239 I |

Mixtures of the state of the art with a birefringence suited for operation in the second or a higher transmission minimum of the Gooch-Tarry curve are not acceptable for active matrix application.

There is thus still a great need for liquid-crystal composition having a high resistivity and other suitable material properties for use in AMDs.

The invention has for one of its objective to provide a nematic liquid crystal mixture having a positive dielectric anisotropy Δε of at least +4 and a birefringence Δn of at least 0.12, characterized in that the mixture comprises simultaneously one or more components having the core structure I

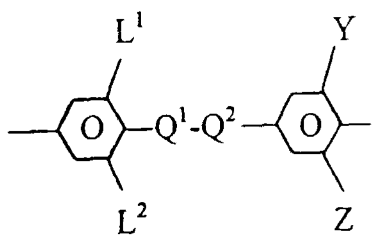

I

wherein $L^1$, $L^2$, Y and Z are each independently of one another H or F, one of $Q^1$ and $Q^2$ is 1,4-phenylene, 3-fluoro-1,4-phenylene or 3,5-difluoro-1,4-phenylene and the other residue $Q^1$ or $Q^2$ is $-CH_2CH_2-$, $-CH_2CH_2CH_2CH_2-$ or - if at least one of $L^1$, $L^2$, Y and Z denotes F - also a single bond, whereby this core structure carries a medium polar group at the Y and Z substituted ring and a non polar group at the other ring and can be optionally further fluorinated in the benzene rings,
and one or more compounds of the formula II

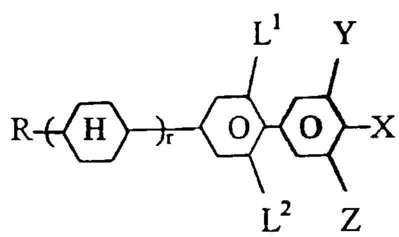

II

wherein

R is alkyl of up to 10 carbon atoms

r is 1 or 2,

X is F, Cl or a fluorinated and/or chlorinated alkyl, alkenyl or alkoxy group of 1 or 2 carbon atoms,

and $L^1$, $L^2$, Y and Z are as defined above, with the proviso that mixtures comprising one or more of the following components are excluded:

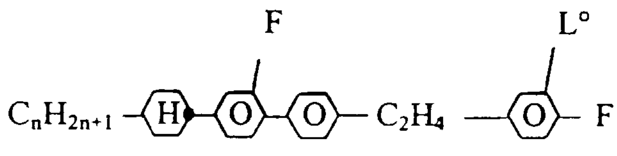

(L° = H or F; n = 1 - 10)

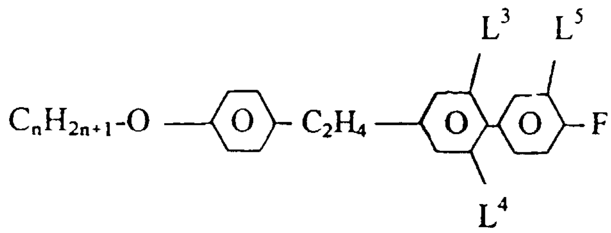

(L3, L4 and L5 independently denote H or F; n = 1 - 10)

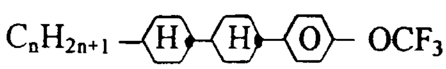

(n = 1 - 10)

The invention has also for its objective to provide a nematic liquid crystal mixture with high temperature and UV-stability

- two plane parallel support plates which together with a frame form a cell of the thickness d,
- integrated non-linear elements for switching individual picture elements on the support plates, and
- a nematic liquid crystal mixture which is present in the cell, has a positive dielectric anisotropy and a birefringence Δn,

the display being operated in the second or a higher transmission minimum of the Gooch-Tarry curve by appropriate selection of d·Δn characterized in that the quotient of the voltage holding ratio $HR_{20}$ after 20 hours exposure to UV-light (280-400 nm, 12 mW/cm$^2$) and $HR_o$ before exposure to UV-light is larger or equal to 98 % and also liquid crystal compositions with a very high resistivity which meet also the other demands.

It has now been found that such values for the HR are even possible for mixtures with higher birefringence by using laterally fluorinated and/or ethyl-linked non-cyano materials. Very high RC time values can be obtained in AMDs. These mixtures also show a reduced viscosity and allow short switching times at reasonable threshold voltages.

The thickness of the AMDs is preferably in the range of 3 to 10 µm. Especially preferred is the range from 3 to 7 µm.

The following preferred embodiment concern the nematic liquid crystal mixture which is present in the AMD:

The birefrigence Δn of the nematic liquid crystal mixture is 0.12 to 0.20, preferred 0.13 to 0.19.

The dielectric anisotropy of the nematic liquid crystal mixture is at least +5.0, preferably at least +6.0.

The liquid crystal mixture contains one or more compounds of the formula Ia

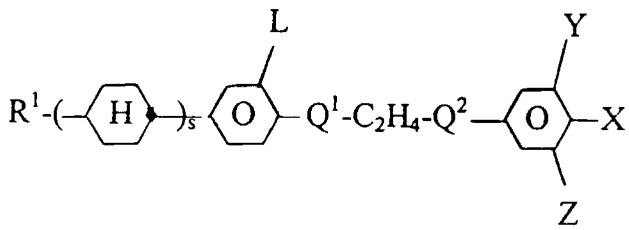

Ia

wherein

$R^1$ is alkyl or alkoxy of up to 10 carbon atoms

s is 0 or 1,

X is F, Cl, $CF_3$, $OCF_3$ or $OCHF_2$,

and
L, Y and Z are each H or F, and
one of $Q^1$ and $Q^2$ is 1,4-phenylene or 3-fluoro-1,4-phenylene and the other residue is a single bond.

The liquid crystal mixture contains one or more compounds of the formula IIa

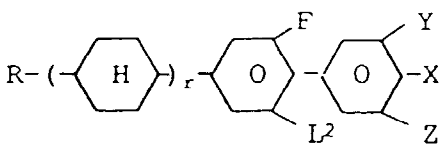

IIa

wherein

R is alkyl of up to 7 carbon atoms
r is 1 or 2,
X is F, Cl, $CF_3$, $OCF_3$ or $OCHF_2$, and
$L^2$, Y and Z have the meaning given above.

Preferably

$L^2$ = X = Y = F and Z = H or
$L^2$ = H and X = Y = Z = F.

The liquid crystal mixture contains one or more compounds of the group consisting of III to IX

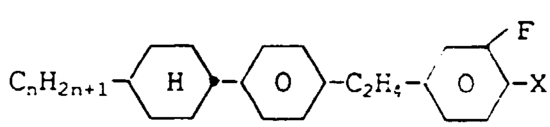

III

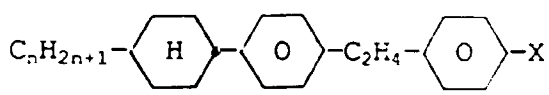

IV

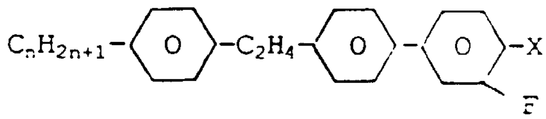

V

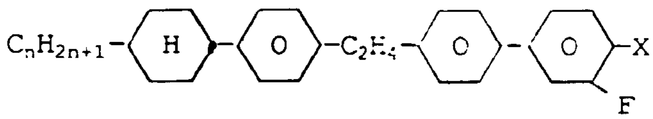

VI

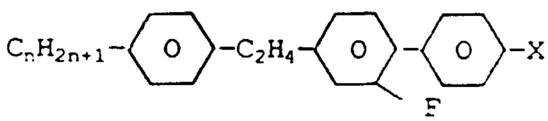

VII

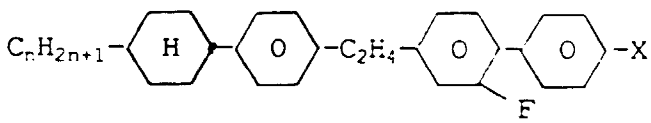

VIII

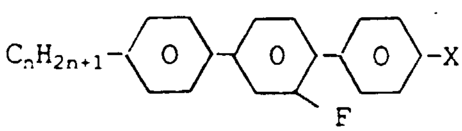

IX

wherein n is preferably 1 to 7 and X denotes F, Cl, $CF_3$, $OCF_3$ or $OCHF_2$.

The compounds shown above are known from e.g. DOS 30 42 391, DOS 39 02 328, DOS 39 13 554, DOS 39 09 802, WO 89/02884, WO 90/15113, WO 90/09420, WO 91/08184,. WO 91/03450, the International Patent Appln. No. PCT/EP 90/01292, No. PCT/EP 91/00411, No. PCT/EP 90/01471, No. PCT/EP 90/0 2109 and the European Patent Appln. No. 9 1 100 675.7 or can be prepared in analogy to known compounds.

The liquid-crystalline mixtures disclosed in WO-A-91/ 15555, DE-A-4139553 and WO-A91/02779 have so far be known as mixtures similar to those of the present invention.

The mixtures according to the present invention usually are based on the medium polar components having the indicated core structure and other non-cyano components. Of course, however, such mixtures can also additionally contain known cyano LC components if extremly high values fcr the HR are not needed, e.g. for TN or STN-use. Such mixtures can also contain tolan components for adjusting extremely high $\Delta n$ values. The resulting mixtures are important for achieving very broad nematic phase ranges including very low temperatures (outdoor use).

The highly advantageous properties of the claimed mixtures are partly achieved by using components having the core structure:

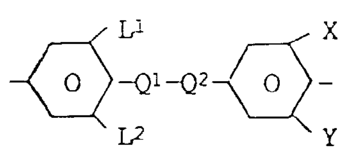

The nature of the remaining terminal groups is not very critical and there can be used successfully a vast multitude

of non polar and medium polar halogenated terminal groups.

The terminal group located at the Z and Y substituted ring is a medium polar group such as F, Cl or a fluorinated and/or chlorinated alkyl, alkoxy or alkenyl gorup of 1, 2 or more carbon atoms. Preferred groups are F, Cl, $CF_3$, $OCF_3$, $CHF_2$, $OCHF_2$, $OCF_2Cl$, $OCF_2CF_2H$.

The other terminal group is preferably a non polar group such as R,

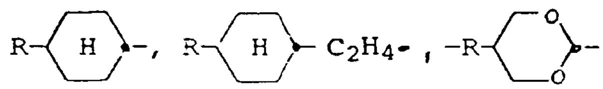

etc. R is preferably an alkyl, alkoxy, oxaalkyl, dioxaalkyl, alkenyl, fluoroalkyl or chloroalkyl group of in each case up to 10 carbon atoms.

The preparation of the mixtures according to the invention is effected in the conventional manner. In general, the desired amount of the components wich is used in the smaller amount is dissolved in the components which constitutes the main constituent, preferably at elevated temperature. If this temperature is chosen to be above the clear point of the main constituent, the completeness of the process of dissolving can be observed particularly easily.

However, it is also possible to mix solutions of the components in a suitable organic solvent, for example acetone, chloroform or methanol, and to remove the solvent does not introduce any contaminants or undesirable dopants.

By means of suitable additives the liquid crystal phases according to the invention can be modified in such a way that they can be used in any hitherto disclosed kind of AMD.

Especially preferred are the mixtures of the present invention for use in active matrix projection systems including PDLC type systems.

The examples below serve to illustrate the invention without limiting it. In the examples, the melting point and clear point of a liquid crystal substance are given in degrees Celsius. The percentages are by weight.

The measurement of HR was performed as described by S. Matsumoto et al. (Liquid Crystals 5, 1320 (1989)) in standard 6μ TN-displays without spacers. Standard floatglass with conductive ITO layers (Balzers) and a rubbed polyimide layer (AL-1051 of Japan Synthetic Rubber) as orientation layer was used. The cells were sealed with an UV-curable adhesive (NOA-61 of Norland) and filled under standard conditions. The liquid crystal mixture was composed of components being carefully purified under standard procedures. UV exposure was performed in a Heraeus-Suntest with a Xenon lamp (1.1 kw, 0.082 W/cm$^2$, UV cutoff 310 nm).

In the present patent application and in the following examples all chemical structures of LC compounds are given by acronyms the transformation of which into chemical formulae is done as shown in the following. All residues $C_nH_{2n+1}$ and $C_mH_{2m+1}$ are straight-chained alkyl groups with n resp. m atoms. The code of Table B is self-explanatory. In Table A only the acronym for the core structure is given. In a concrete compound this acronym is followed by a dash and a code for the substituents $R^1$, $R^2$, $L^1$ and $L^2$ as follows:

| Code for $R^1$, $R^2$, $L^1$, $L^2$ | $R^1$ | $R^2$ | $L^1$ | $L^2$ |
|---|---|---|---|---|
| nm | $C_nH_{2n+1}$ | $C_mH_{2m+1}$ | H | H |
| nOm | $C_nH_{2n+1}$ | $OC_mH_{2m+1}$ | H | H |
| nO.m | $OC_nH_{2n+1}$ | $C_mH_{2m+1}$ | H | H |
| n | $C_nH_{2n+1}$ | CN | H | H |
| nN.F | $CnH_{2n+1}$ | CN | H | F |
| nF | $C_nH_{2n+1}$ | F | H | H |
| nOF | $OC_nH_{2n+1}$ | F | H | H |
| nCl | $C_nH_{2n+1}$ | Cl | H | H |
| nF.F | $C_nH_{2n+1}$ | F | H | F |
| nOmFF | $C_nH_{2n+1}$ | $OC_mH_{2m+1}$ | F | F |
| nmF | $C_nH_{2n+1}$ | $C_mH_{2m+1}$ | F | H |
| $nCF_3$ | $C_nH_{2n+1}$ | $CF_3$ | H | H |
| $nOCF_3$ | $C_nH_{2n+1}$ | $OCF_3$ | H | H |
| $nOCF_2$ | $C_nH_{2n+1}$ | $OCHF_3$ | H | H |
| nS | $C_nH_{2n+1}$ | NCS | H | H |
| rVsN | $C_rH_{2r+1}$-CH=CH-$C_sH_{2s}$- | CN | H | H |
| rEsN | $C_rH_{2r+1}$-O-$C_sH_{2s}$- | CN | H | H |

(continued)

| Code for $R^1$, $R^2$, $L^1$, $L^2$ | $R^1$ | $R^2$ | $L^1$ | $L^2$ |
|---|---|---|---|---|
| nNF | $C_nH_{2n+1}$ | CN | F | H |
| nAm | $C_nH_{2n+1}$ | $COOC_mH_{2m+1}$ | H | H |

**Table A:**

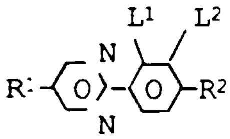

PYP

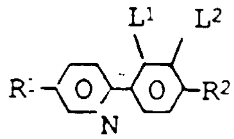

PYRP

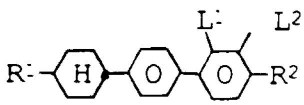

BCH

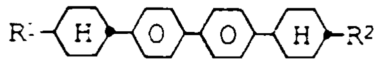

CBC

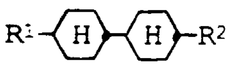

CCH

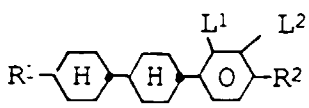

CCP

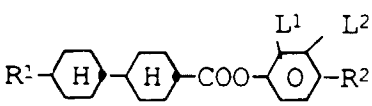

CP

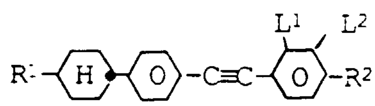

CPTP

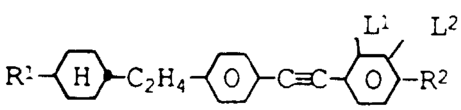

CEPTP

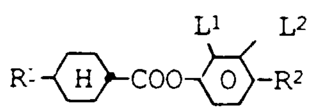

D

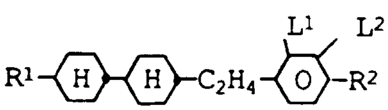

ECCP

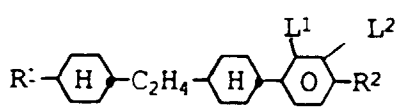

CECP

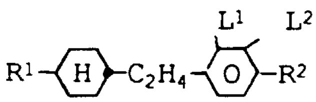

EPCH

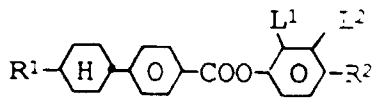

HP

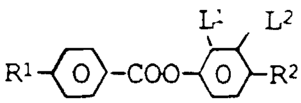

ME

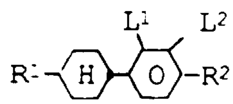

PCH

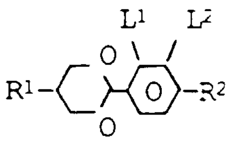

PDX

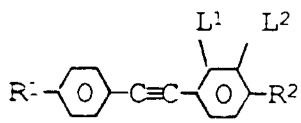

PTP

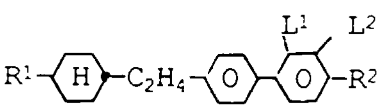

BECH

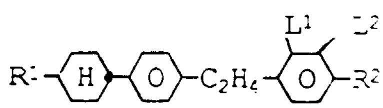

EBCH

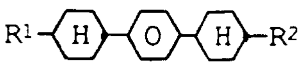

CPC

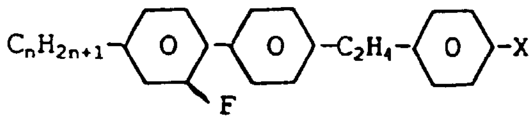

FET-nX

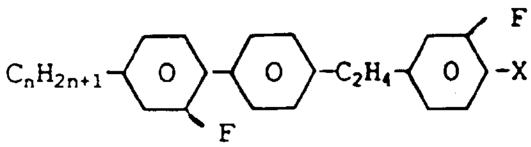

FET-nX.F

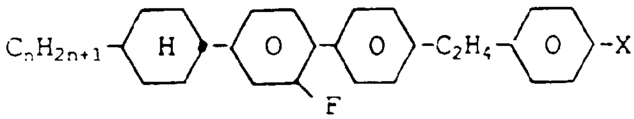

CFET-nX

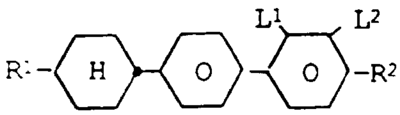

BCH

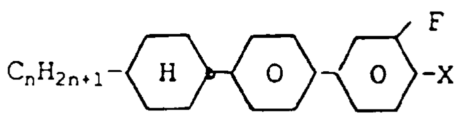

BCH-nX.F

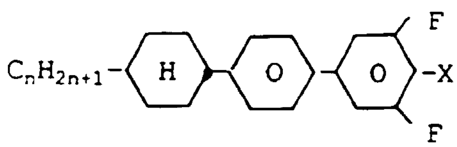

BCH-nX.F.F

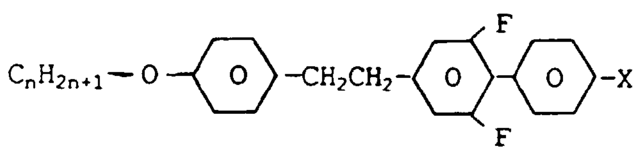

PEUP-nOX

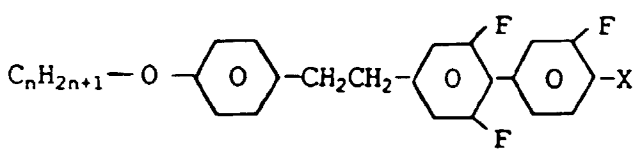

PEUP-nOX.F

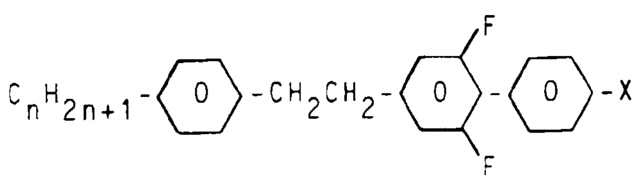

PEUP-nX

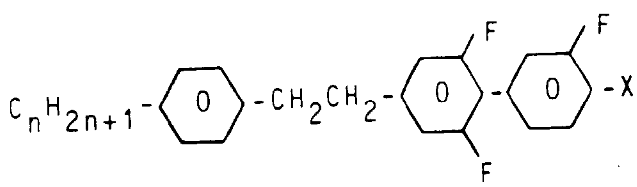

PEUP-nX.F

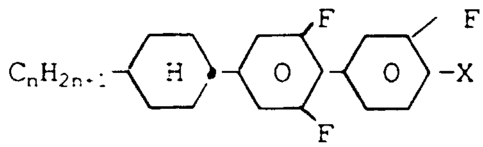

**CUP-nX.F**

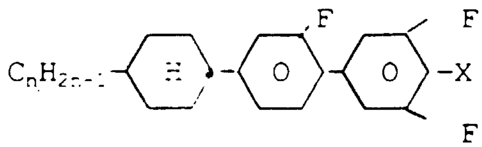

**CLP-nX.F.F**

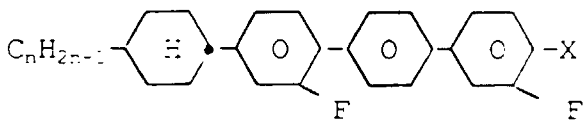

**CLPP-nX.F**

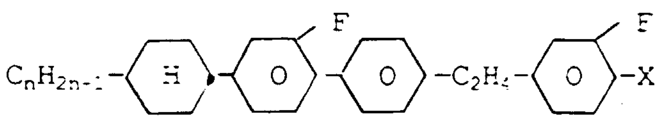

**CFET-nX.F**

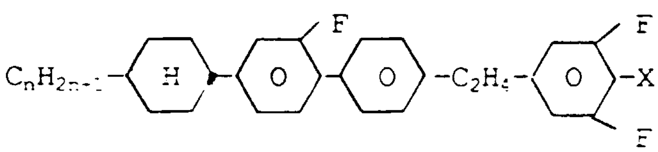

**CFET-nX.F.F**

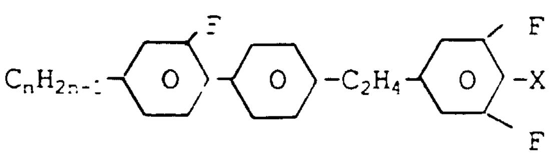

**FET-nX.F.F**

**Table B:**

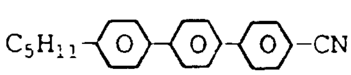

**T15**

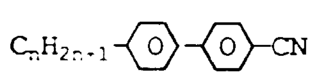

**K3n**

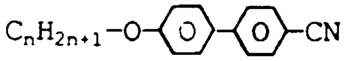

M3n

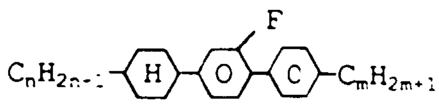

BCH-n.Fm

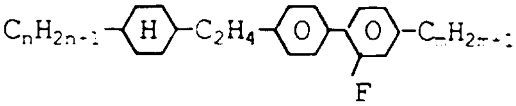

Inm

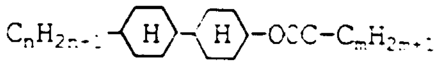

C-nm

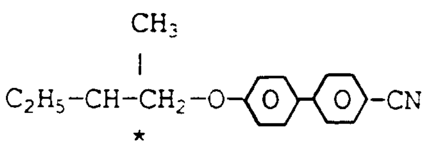

C15

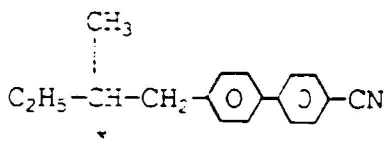

CB15

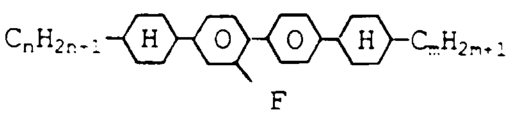

CBC-nmF

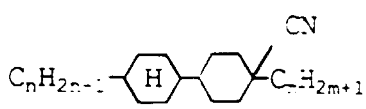

CCN-nm

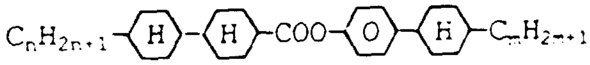

CCPC-nm

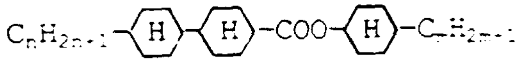

CH-nm

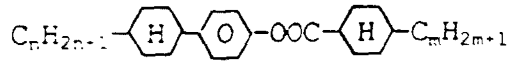

HD-nm

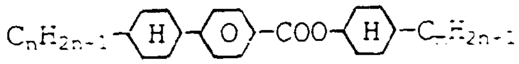

HH-nm

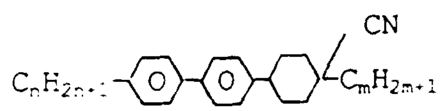

NCB-nm

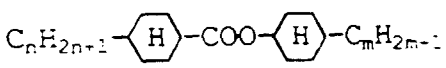

OS-nm

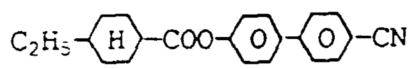

CHE

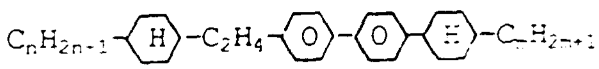

ECBC-nm

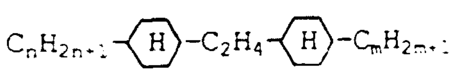

ECCH-nm

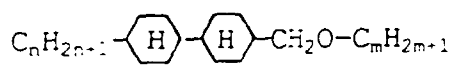

CCH-n1EM

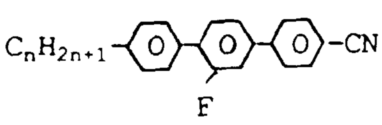

T-nFn

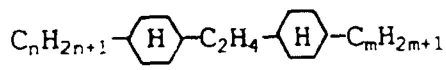

ECCH-nm

Example 1

| | | |
|---|---|---|
| S → N [°C] | - | |
| Clearing point [°C] | 110 | |
| Δn (589 nm, 20 °C) | 0.1739 | |
| $n_e$ (589 nm, 20 °C) | 1.7000 | |
| ε‖ (1 kHz, 20 °C) | 9.9 | |
| $ε_⊥$ (1 kHz, 20 °C) | 3.3 | |
| Δε (1 kHz, 20 °C) | 6.6 | |
| Composition [%] : | FET-2CL | 15.00 |
| | FET-3CL | 15.00 |
| | FET-5CL | 15.00 |
| | BCH-3F.F | 13.00 |
| | BCH-5F.F | 13.00 |
| | CBC-33 | 3.00 |
| | CBC-53 | 3.00 |
| | CBC-55 | 3.00 |
| | BCH-32 | 5.00 |
| | BCH-52 | 5.00 |
| | CUP-3F.F | 5.00 |
| | CUP-5F.F | 5.00 |

Example 2

| | | |
|---|---|---|
| S → N [°C] | - | |
| Clearing point [°C] | +99 | |
| Δn (589 nm, 20 °C) | +0.1571 | |
| $n_e$ (589 nm, 20 °C) | 1.6664 | |
| ε‖ (1 kHz, 20 °C) | 9.6 | |
| $ε_⊥$ (1 kHz, 20 °C) | 3.4 | |
| Δε (1 kHz, 20 °C) | +6.2 | |
| Composition [%]: | PCH-5F | 5.00 |
| | PCH-7F | 6.00 |
| | CUP-3F.F | 6.00 |
| | CUP-5F.F | 6.00 |
| | FET-5CL | 18.00 |
| | FET-3Cl | 12.00 |
| | BCH-3F.F | 12.00 |
| | BCH-5F.F | 12.00 |
| | BCH-32 | 5.00 |
| | BCH-52 | 5.00 |
| | BCH-59 | 4.00 |
| | CBC-33 | 3.00 |
| | CBC-53 | 3.00 |
| | CBC-55 | 3.00 |

Example 3

| | | |
|---|---|---|
| S → N [°C] | < 20 | |
| Clearing point [°C] | 114 | |

(continued)

| | | |
|---|---|---|
| $\Delta n$ (589 nm, 20 °C) | 0.1658 | |
| $n_e$ (589 nm, 20 °C) | 1.6764 | |
| $\varepsilon_{\parallel}$ (1 kHz, 20 °C) | - | |
| $\varepsilon_{\perp}$ (1 kHz, 20 °C) | - | |
| $\Delta\varepsilon$ (1 kHz, 20 °C) | - | |
| Composition [%]: | PCH-301 | 6.00 |
| | CUP-3F.F | 5.00 |
| | CUP-5F.F | 5.00 |
| | FET-3CL | 12.00 |
| | FET-5CL | 16.00 |
| | BCH-3F.F | 11.00 |
| | BCH-5F.F | 11.00 |
| | BCH-32F | 5.00 |
| | BCH-52F | 5.00 |
| | BCH-32 | 5.00 |
| | BCH-52 | 5.00 |
| | BCH-59 | 5.00 |
| | CBC-33 | 3.00 |
| | CBC-53 | 3.00 |
| | CBC-55 | 3.00 |

All mixtures shown above show HA20/HR° ≥ 98 % and are thus highly valuable as high $\Delta n$ mixtures for AMDs.

## Claims

1. A nematic liquid crystal mixture having a positive dielectric anisotropy $\Delta\varepsilon$ of at least +4 and a birefringence An of at least 0.12, characterized in that the mixture comprises simultaneously one or more components having the core structure I

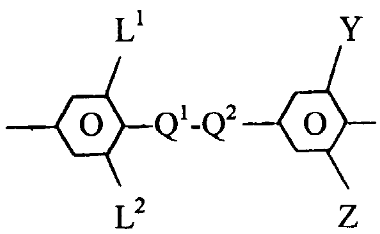

I

wherein $L^1$, $L^2$, Y and Z are each independently of one another H or F, one of $Q^1$ and $Q^2$ is 1,4-phenylene, 3-fluoro-1,4-phenylene or 3,5-difluoro-1,4-phenylene and the other residue $Q^1$ or $Q^2$ is $-CH_2CH_2-$, $-CH_2CH_2CH_2CH_2-$ or - if at least one of $L^1$, $L^2$, Y and Z denotes F - also a single bond, whereby this core structure carries a medium polar group at the Y and Z substituted ring and a non polar group at the other ring and can be optionally further fluorinated in the benzene rings,

and one or more compounds of the formula II

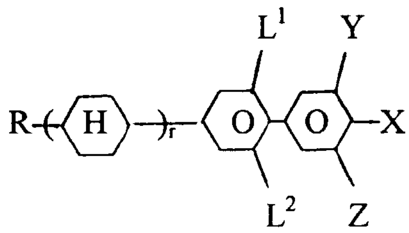

II

wherein

R is alkyl of up to 10 carbon atoms

r is 1 or 2,

X is F, Cl or a fluorinated and/or chlorinated alkyl, alkenyl or alkoxy group of 1 or 2 carbon atoms,

and $L^1$, $L^2$, Y and Z are as defined above, with the proviso that mixtures comprising one or more of the following components are excluded:

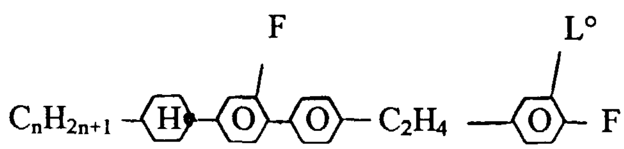

(L° = H or F; n = 1 - 10)

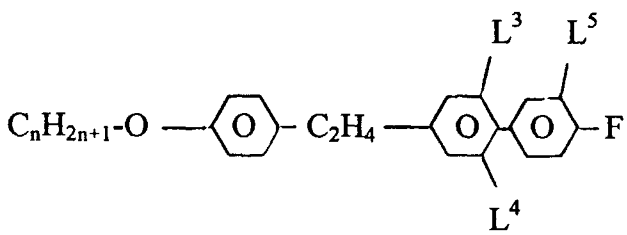

(L3, L4 and L5 independently denote H or F; n = 1 - 10)

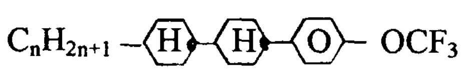

(n = 1 - 10)

**2.** Mixture according to claim 1 being based on halogenated liquid crystal components of medium polarity.

**3.** Mixture according to claim 1 or 2 being essentially free of cyano components.

**4.** Mixture according to at least one of the claims 1 to 3, characterized in that the liquid crystal mixture contains one or more compounds of the formula Ia

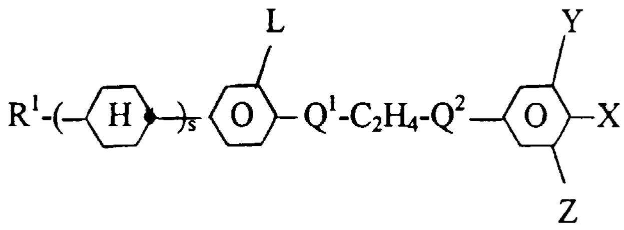

Ia

wherein

$R^1$ is alkyl or alkoxy of up to 10 carbon atoms

s is 0 or 1,

X is F, Cl, $CF_3$, $OCF_3$ or $OCHF_2$,

and
L, Y and Z are each H or F, and
one of $Q^1$ and $Q^2$ is 1,4-phenylene or 3-fluoro- 1,4-phenylene and the other residue is a single bond.

## Patentansprüche

1. Nematische Flüssigkristallmischungen mit einer positiven dielektrischen Anisotropie $\Delta\varepsilon$ von mindestens +4 und einer Doppelbrechung $\Delta n$ von mindestens +0,12, dadurch gekennzeichnet, daß die Mischungen gleichzeitig eine oder mehrere Komponenten der Kernstruktur I

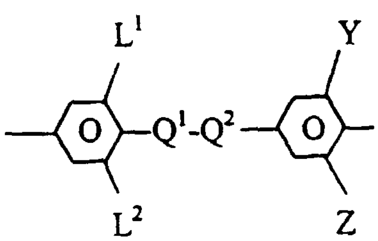

I

worin $L^1$, $L^2$, Y und Z jeweils unabhängig voneinander H oder F, einer der Reste $Q^1$ und $Q^2$ 1,4-Phenylen, 3-Fluor-1,4-phenylen oder 3,5-Difluor-1,4-phenylen und der andere Rest $Q^1$ oder $Q^2$ $-CH_2CH_2-$, $-CH_2CH_2CH_2CH_2-$ oder auch eine Einfachbindung bedeuten, falls mindestens einer der Reste $L^1$, $L^2$, Y und Z F bedeutet, wobei diese Kernstruktur am durch Y und Z substituierten Ring eine Gruppe mittlerer Polarität und am anderen Ring eine unpolare Gruppe trägt und an den Benzolringen gegebenenfalls weiterfluoriert sein kann,
und eine oder mehrere Verbindungen der Formel II

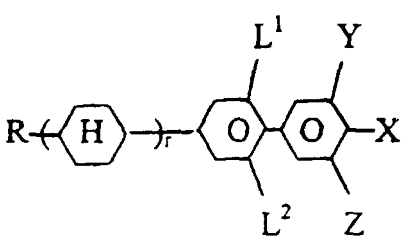

II

enthalten, worin

R Alkyl mit bis zu 10 Kohlenstoffatomen,
r 1 oder 2,
X F, Cl oder eine fluorierte und/oder chlorierte Alkyl-, Alkenyl- oder Alkoxygruppe mit 1 oder 2 Kohlenstoffatomen bedeuten,

und $L^1$, $L^2$, Y und Z die obengenannte Bedeutung besitzen, mit der Maßgabe, daß Mischungen mit einer oder mehreren der nachfolgenden Komponenten ausgeschlossen sind:

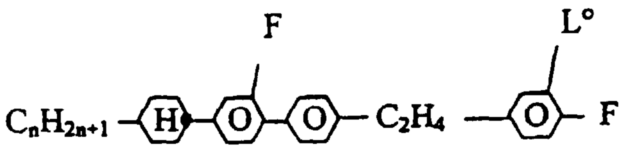

(L° = H oder F; n = 1 - 10)

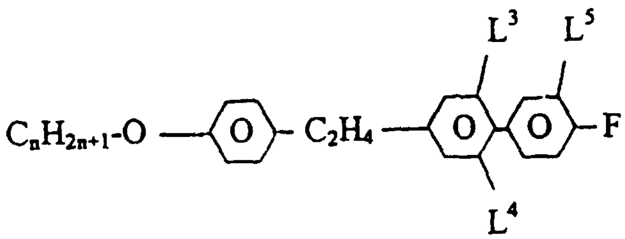

($L^3$, $L^4$ und $L^5$ unabhängig voneinander bedeuten H oder F; n = 1 - 10)

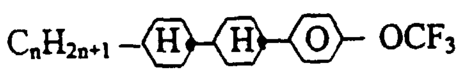

(n = 1 - 10)

**2.** Mischungen nach Anspruch 1, die auf halogenierten Flüssigkristallkomponenten mittlerer Polarität basieren.

**3.** Mischungen nach Anspruch 1 oder 2, die im wesentlichen frei von Cyanokomponenten sind.

**4.** Mischungen nach mindestens einem der Ansprüche 1 bis 3, dadurch gekennzeichnet, daß die Flüssigkristallmischungen eine oder mehrere Verbindungen der Formel Ia

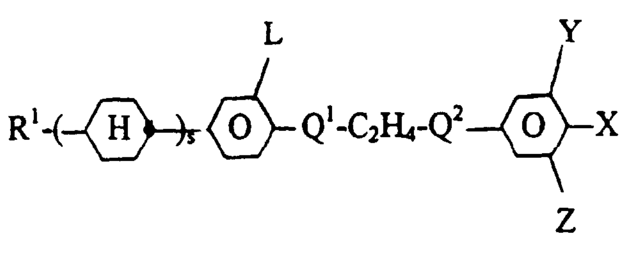

Ia

enthalten, worin

$R^1$ Alkyl oder Alkoxy mit bis zu 10 Kohlenstoffatomen,
s 0 oder 1,
X F, Cl, $CF_3$, $OCF_3$ oder $OCHF_2$

und
L, Y und Z jeweils H oder F und
einer der Reste $Q^1$ und $Q^2$ 1,4-Phenylen oder 3-Fluor-1,4-phenylen und der andere Rest eine Einfachbindung bedeuten.

**Revendications**

1. Mélange à cristaux liquides nématiques ayant une anisotropie diélectrique positive $\Delta\varepsilon$ d'au moins +4 et une biréfringence $\Delta n$ d'au moins 0,12, caractérisé en ce que le mélange comprend simultanément un ou plusieurs composants ayant la structure cyclique I

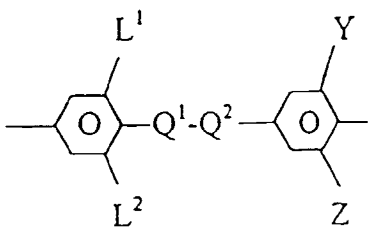

I

dans laquelle $L^1$, $L^2$, Y et Z représentent chacun indépendamment l'un de l'autre H ou F, l'un des radicaux $Q^1$ et $Q^2$ représente un 1,4-phénylène, un 3-fluoro-1,4-phénylène ou un 3,5-difluoro-1,4-phénylène et l'autre résidu $Q^1$ ou $Q^2$ représente $-CH_2CH_2-$, $-CH_2CH_2CH_2CH_2-$ ou encore - si au moins un des radicaux $L^1$ , $L^2$, Y et Z dénote F - une liaison simple, ce qui fait que cette structure cyclique porte un groupe polaire moyen sur le cycle à substitution Y et Z et un groupe non polaire sur l'autre cycle et peut facultativement être encore fluorée dans les noyaux benzène,
et un ou plusieurs composés de formule II

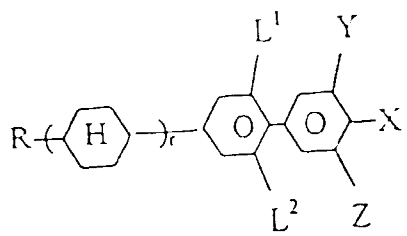

II

dans laquelle

R est un alkyle ayant jusqu'à 10 atomes de carbone
r vaut 1 ou 2,
X représente F, Cl ou un groupe alkyle, alcényle ou alcoxy fluoré et/ou chloré ayant 1 ou 2 atomes de carbone,

et $L^1$ , $L^2$ , Y et Z sont tels que définis ci-dessus, sous réserve d'exclusion des mélanges comprenant un ou plusieurs des composants suivants:

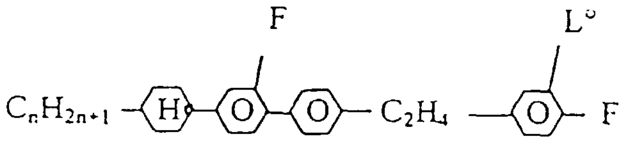

(L°= H ou F;
n = 1 - 10)

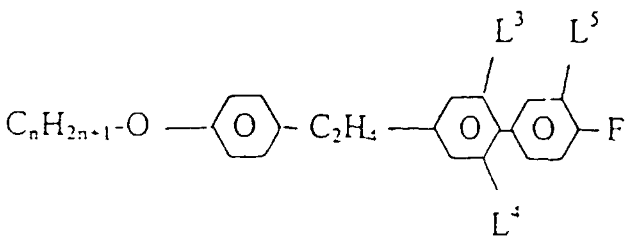

($L^3$, $L^4$ et $L^5$ dénotent indépendamment H ou F;
n = 1 - 10)

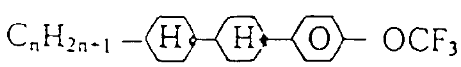

(n = 1 - 10)

2. Mélange selon la revendication 1 à base de composants à cristaux liquides halogénés de polarité moyenne.

3. Mélange selon la revendication 1 ou 2 essentiellement dépourvu de composants cyano.

4. Mélange selon au moins une des revendications 1 à 3, caractérisé en ce que le mélange à cristaux liquides contient un ou plusieurs composés de formule Ia

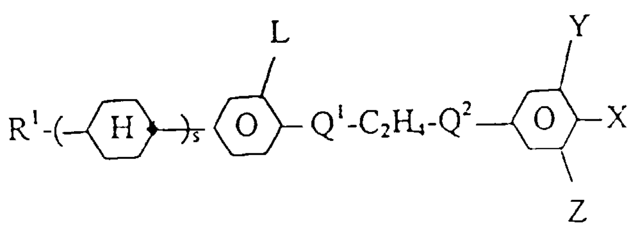

Ia

dans laquelle

$R^1$ est un alkyle ou un alcoxy ayant jusqu'à 10 atomes de carbone,
s vaut 0 ou 1,
X représente F, Cl, $CF_3$, $OCF_3$ ou $OCHF_2$,

et
L, Y et Z représentent chacun H ou F, et
l'un des radicaux $Q^1$ et $Q^2$ représente un 1,4-phénylène ou un 3-fluoro-1,4-phénylène et l'autre résidu est une

liaison simple.